# FASCICULE DE BREVET EUROPEEN

(11) **EP 2 694 953 B1**
(45) Date de publication et mention de la délivrance du brevet: **03.05.2017**
(21) Numéro de dépôt: 12717425.8
(22) Date de dépôt: 02.04.2012
(51) Int. Cl.: G01N 23/20, G01N 23/207, G01N 23/203

(54) **PROCÉDÉ DE MESURE DE DIFFRACTION DES RAYONS X, SES APPLICATIONS ET DISPOSITIF DE MISE EN OEUVRE**
VERFAHREN ZUR MESSUNG DER STREUUNG VON RÖNTGENSTRAHLEN, ANWENDUNGSVERFAHREN UND IMPLEMENTIERUNGSVORRICHTUNG
METHOD OF MEASURING SCATTERING OF X-RAYS, ITS APPLICATIONS AND IMPLEMENTATION DEVICE

(30) Priorité: 06.04.2011 FR 1153007
(43) Date de publication de la demande: 12.02.2014
(73) Titulaire: Universite de Rouen, 76130 Mont-Saint-Aignan (FR)
(72) Inventeur: COQUEREL, Gérard, F-76520 Boos (FR); SANSELME, Morgane, F-76230 Bois Guillaume (FR); LAFONTAINE, Anaïs, 76100 Rouen (FR)
(74) Mandataire: Cabinet Plasseraud
(86) Numéro de dépôt international: PCT/FR2012/050707
(87) Numéro de publication internationale: WO 2012/136921

(56) Documents cités:
- JP-A- 10 038 772
- JP-B2- 3 685 422
- US-A- 3 112 398
- US-A1- 2010 254 888

## Description

La présente invention concerne un procédé de mesure de diffraction des rayons X, ses applications et un dispositif de mise en oeuvre.

La forme solide des composés chimiques est la forme de loin la plus utilisée. Habituellement, les composés chimiques sont fabriqués après une série de réactions en milieu liquide, à la fin desquelles les composés chimiques sont obtenus sous forme solide, cristalline ou amorphe.

Il est d'un grand intérêt, notamment dans l'industrie pharmaceutique, de suivre la cristallisation des composés. Pour gérer au mieux la cristallisation d'un composé chimique, il est nécessaire de suivre ce qui se passe lorsque le produit est en suspension.

Plusieurs technologies dédiées au suivi *in situ* de cristallisation ont été développées au cours des dernières années, par exemple RAMAN ou NIR. Mais aucune de ces techniques n'est aussi précise et exacte que la diffraction des rayons X. Il n'existe cependant à ce jour aucun dispositif *in situ* permettant de suivre la cristallisation d'un composé chimique par diffraction des rayons X avec une source de rayons X de laboratoire. Les dispositifs déjà existant nécessitent soit l'utilisation d'un rayonnement synchrotron, soit une boucle de recirculation externe au réacteur où se fait la réaction, comme la technique PreFIX Slurry Flow Cell® de la société Panalytical. Une des difficultés dans le suivi *in situ* d'une cristallisation provient de ce que la cristallisation se fait en milieu liquide.

L'article In-situ Monitoring of the formation of Crystalline Solids N. Pienack, W. Bensch, Angew. Chem. Int., 2011, 50, 2-23 décrit les principales façons de suivre in situ une cristallisation.

Rappelons que la diffractométrie de rayons X est une technique d'analyse fondée sur la diffraction des rayons X sur la matière cristalline mettant en jeu un appareil de mesure appelé un diffractomètre. Classiquement, un diffractomètre comprend essentiellement une partie servant à effectuer la mesure (goniomètre, source de RX, porte échantillon, détecteur) et une partie électrique (générateur, circuit de refroidissement, cartes informatiques).

JP 3 685422 B2 et JP 10 038772 décrivent des diffractomètres permettant une analyse RX par le dessous, mais le diffractomètre de JP 10 038772 n'est pas compatible avec un réacteur où un procédé de cristallisation pourrait être réalisé, car le porte-échantillon effectue une rotation durant l'analyse. Le diffractomètre de JP 3 685422 ne permet pas de suivre l'évolution des phases solides en suspension ou en équilibre avec un gaz en fonction de la température, du solvant, de l'agitation, de l'humidité.

Après de longues recherches la demanderesse a mis au point une technique fondée sur la diffraction des rayons X permettant une excellente discrimination entre les phases solides (cristallisées, amorphes, semi-cristallines...) présentes lors des différentes étapes d'un procédé de précipitation - cristallisation, et a mis au point un dispositif à cette fin. La technique de l'invention est exploitable même avec un échantillon solide de faible masse (par exemple environ 1 mg), en particulier lorsque l'échantillon est en équilibre avec un gaz de composition fixée et est en conséquence sensible aux conditions de régulations en composition du gaz (par exemple humidité) et en température.

C'est pourquoi la présente demande a pour objet un procédé de mesure de diffraction des rayons X selon la revendication 1.

Rappelons que dans les analyses par diffraction des rayons X, on fait varier les angles d'incidence et de réflexion, qui par ailleurs sont égaux.

Plus précisément, on projette vers le fond plat perméable aux rayons X, par l'extérieur du récipient, un fluide thermostaté à la même température que celle du composé à analyser dans le récipient.

Le composé à analyser peut se présenter au début du procédé en solution, en suspension dans un de ses solvants, en émulsion ou à l'état pulvérulent sous atmosphère contrôlée.

Dans des conditions préférentielles de mise en oeuvre de l'invention, le fond plat perméable aux rayons X est installé horizontalement.

Pour procéder à la mesure, le déplacement de la source et du détecteur symétrique par rapport à la verticale est effectué par exemple selon des angles (angles de Bragg) par rapport à l'horizontale de -0,5 degrés à -70 degrés, notamment de -3 degrés à -50 degrés en échelle angulaire 2 Thêta. Rappelons qu'en diffraction des rayons X, les angles se réfèrent à l'horizontale.

Selon la mesure effectuée, le générateur de rayons X envoie des rayons X sur le composé à analyser pendant une durée par exemple de quelques minutes à plusieurs heures.

La longueur d'onde des rayons X utilisés est par exemple de 1,5405 angström (anticathode en cuivre), 0,5594 angström (anticathode en argent), 0,7093 angström (anticathode en molybdène). Le faisceau peut être monochromatique Kα1 ou un mélange de longueur d'onde de préférence proche, par exemple Kα1 et Kα2.

Dans des conditions préférentielles de mise en oeuvre du procédé, le récipient utilisé est muni d'un dispositif de thermorégulation qui permet de fixer à une constante la température - mode isotherme - mais aussi d'appliquer un gradient de température pour suivre un procédé polythermique. A cette fin, le récipient utilisé est par exemple muni d'une double enveloppe permettant la circulation d'un fluide caloporteur.

On projette un fluide, de préférence un gaz, comme l'air ou l'azote par exemple, vers le fond plat perméable aux rayons X, par l'extérieur du récipient. Ainsi, dans certaines conditions d'humidité, on limite la condensation sur le fond plat. Le gaz peut être avantageusement sec. Le fluide, de préférence le gaz, est thermostaté pour procurer une meilleure régulation thermique du système. Le fluide est thermostaté à la même température que celle du composé à analyser dans le récipient. Ainsi, la technique de l'invention est exploitable même avec un échantillon solide de faible masse (par exemple environ 1 mg), en particulier lorsque l'échantillon est en équilibre avec un gaz de composition fixée et est en conséquence sensible aux conditions de régulations en composition du gaz (par exemple humidité) et en température.

Dans le procédé objet de la présente invention, le porte-échantillon n'est pas mobile durant les analyses, ce qui permet d'étudier un procédé de cristallisation.

Le composé à analyser peut être généralement une substance solide ou un mélange de substances solides, plus particulièrement un composé cristallisé ou un mélange de plusieurs composés cristallisés.

Le procédé objet de la présente invention possède de très intéressantes qualités et fonctionnalités. Le suivi *in situ,* de la formation ou de l'évolution des solides dans leur milieu permet de limiter les effets inhérents à l'échantillonnage du solide lors d'une étude. Du fait que les rayons X proviennent du dessous et que la diffraction est mesurée également par-dessous, il est possible d'analyser les solides dans leurs états réels, par exemple des solides efflorescents qui ne sont pas stables en dehors de leur solution mère). La possibilité de thermostater permet en outre de réaliser la majorité des procédés de cristallisation dans la continuité de leur élaboration.

Les ports présents sur le couvercle du dispositif de suivi de cristallisation permettent de réaliser des additions de liquide ou de solide et permettent également de coupler l'analyse avec d'autres sondes de mesure (pH, température, NIR, FBRM...)

Ainsi le procédé objet de la présente invention permet de caractériser les phases solides et de suivre leurs évolutions avec une source de diffraction conventionnelle. Ceci prend en compte, les transformations polymorphiques, la formation de co-cristaux, les transitions péritectiques binaires, ternaires et d'ordres supérieurs, les transitions eutectoïdes, les transitions péritectoïdes, la formations de composés d'inclusion, les solvatations ou hydratations, les désolvatations ou déshydratations, les échanges de solvants au sein des phases cristallisées ou encore l'évolution des amorphes en phases cristallines.

Il permet encore de vérifier la stabilité des composés cristallisés en fonction de la matrice dans laquelle il se trouve (liquide, gaz, gel, émulsion, solide amorphe).

Il permet tout autant de détecter les phases métastables et les phases intermédiaires réactionnelles.

Il permet également de suivre la formation ou l'évolution de sels lors de variations du pH.

Il permet de suivre facilement la formation de toutes les espèces cristallisées transitoires, métastables ou stables auxquelles les procédés de précipitation sont à même de donner naissance.

Le porte-échantillon n'étant pas mobile pendant la durée des analyses, on peut étudier un procédé de cristallisation.

Le flux de fluide thermo régulé envoyé sur la face externe inférieure de la membrane assure une régulation thermique efficace et précise d'un solide en contact avec le fond perméable aux rayons X. En effet, le flux permet de contrôler dynamiquement ou statiquement, ou dynamiquement et statiquement la température du fond contre lequel il est envoyé.

Ces qualités et fonctionnalités sont illustrées ci-après dans la partie expérimentale.

Elles justifient l'utilisation des procédés ci-dessus décrits, notamment dans le suivi des processus de cristallisation, dans les suivis d'évolutions polymorphique ou de solvatation, dans l'étude de stabilité d'un système dans une matrice définie, si désiré en fonction de la température, dans la recherche de phases métastables ou d'intermédiaires réactionnels, dans l'étude de l'évolution des sels en fonction du pH.

Dans la présente demande, par "liqueur-mère" l'on entend solution saturée qui est en équilibre avec le solide en suspension.

En particulier dans le domaine de la production pharmaceutique, le procédé de la présente invention permet de savoir si l'on n'a que la ou les phases souhaitées et pas d'autres dans le suivi de la fabrication de composés cristallisés. On peut alors établir une liste de pics sur le diffractogramme d'un produit inconnu, que l'on peut comparer à une liste de pics établie sur le diffractogramme d'un produit de référence.

C'est pourquoi la présente demande a aussi pour objet l'utilisation du procédé ci-dessus décrit pour le suivi d'un processus de cristallisation.

La présente demande a aussi pour objet l'utilisation du procédé ci-dessus décrit pour le suivi d'évolutions polymorphique ou de solvatation.

La présente demande a encore pour objet l'utilisation du procédé ci-dessus décrit pour l'étude de stabilité d'une phase solide dans une matrice comme liquide, gaz, gel, émulsion ou solide amorphe.

La présente demande a également pour objet l'utilisation du procédé ci-dessus décrit pour la recherche de phases métastables ou d'intermédiaires réactionnels.

La présente demande a également pour objet l'utilisation du procédé ci-dessus décrit pour l'étude de l'évolution des sels en fonction du pH.

La présente demande a également pour objet l'utilisation du procédé ci-dessus décrit pour l'étude de l'évolution des cristaux d'une protéine en fonction de la force ionique ou du pH ou d'un anti-solvant ou de plusieurs de ces paramètres, notamment deux paramètres.

La présente demande a également pour objet l'utilisation du procédé ci-dessus décrit pour l'étude de l'évolution des sels en fonction de la composition en solvant et/ou en constituants de toutes sortes susceptibles de donner lieu à la formation d'au moins un solide

La présente demande a aussi pour objet un dispositif selon la revendication 11 conçu pour la mise en oeuvre du procédé ci-dessus.

Selon la présente invention, des éléments d'un diffractomètre classique utilisés pour la mesure ont été modifiés. La façon dont le goniomètre est orienté a été modifiée par rapport à un goniomètre que l'on trouve dans les systèmes standard de diffraction sur poudre. En conséquence, on a conçu le récipient particulier ci-dessus, dans lequel on peut réaliser des cristallisations que l'on peut suivre selon le procédé objet de la présente demande.

Ainsi, le goniomètre du diffractomètre de rayons X présente une géométrie -thêta/-thêta ou encore par réflexion inversée pour diriger un faisceau de rayons X vers la membrane transparente aux rayons X.

Ledit récipient comporte des moyens de chauffage ou refroidissement du contenu. Dans ce but, avantageusement ledit récipient comprend une double paroi permettant la circulation d'un fluide caloporteur. Dans un tel cas, un port d'entrée et un port de sortie de fluide caloporteur sont avantageusement prévus. Un système de régulation de température de type thermostat-cryostat peut être relié au récipient. Ce système est avantageusement programmable pour permettre de réaliser un programme de température, cela comprend notamment la possibilité d'effectuer un gradient croissant ou décroissant, un cycle de température, un isotherme, etc....

Dans des conditions préférentielles de mise en oeuvre de l'invention, le fond du récipient ci-dessus comprend une ouverture circulaire obturée par la membrane transparente aux rayons X. Cette ouverture peut avoir un diamètre de 0,5 à 5 cm, de préférence de la taille du faisceau incident.

La membrane transparente aux rayons X est fixée de manière à ce qu'elle soit la plus plate possible techniquement.

Dans d'autres conditions préférentielles de mise en oeuvre de l'invention, le dispositif ci-dessus comprend en outre un agitateur. Dans d'autres conditions préférentielles de mise en oeuvre de l'invention, le dispositif ci-dessus comprend en outre des moyens de fermeture du récipient. Ces moyens de fermeture du récipient permettent de rendre celui-ci notamment étanche aux liquides et éventuellement aux gaz.

Le dispositif ci-dessus comprend un port pour l'installation notamment d'une sonde de température (dite sonde de température interne). Une sonde de température externe est placée avantageusement près de la fenêtre transparente aux rayons X pour assurer une régulation précise en température du fluide externe projeté sur celle-ci. Dans encore d'autres conditions préférentielles de mise en oeuvre de l'invention, le dispositif ci-dessus comprend plusieurs ports pour l'installation notamment d'une ou plusieurs sondes. Le dispositif comprend de préférence deux ou trois ports.

Le dispositif ci-dessus comprend extérieurement au récipient une ou plusieurs buses pour projeter un fluide, de préférence un gaz, comme l'air ou l'azote par exemple, vers le fond plat perméable aux rayons X, par l'extérieur du récipient. Dans toujours d'autres conditions préférentielles de mise en oeuvre de l'invention, le dispositif ci-dessus comprend plusieurs buses.

Le récipient comprend une sonde de température interne servant à accorder la température du composé à analyser et celle du fluide externe. La sonde peut alors communiquer la température du composé à un dispositif de régulation de température du fluide projeté. Une sonde de température externe peut être placée près de la fenêtre transparente aux rayons X pour assurer le contrôle de la température du fluide externe thermo-régulé grâce à un second système de régulation. La sonde de température externe ne doit évidemment pas gêner le faisceau X.

Selon la hauteur du contenu dans le récipient, la membrane transparente aux rayons X soumise à une pression peut fléchir. De préférence, la membrane transparente aux rayons X est fixée au récipient de manière à ce celle-ci soit parfaitement plate et horizontale.

La membrane transparente aux rayons X présente des propriétés adaptées à l'utilisation du dispositif. Elle présente de préférence des propriétés de résistance chimique et physique, notamment : résistance aux solvants et produits chimiques placés dans le récipient, si nécessaire résistance à la température, indéformabilité, faible élasticité, résistance aux tensions, résistance à l'effet d'abrasion de la poudre en mouvement et aux déchirures. Elle présente avantageusement plus de quatre, notamment plus de cinq, plus particulièrement la totalité de ces propriétés. Des matériaux qui présentent la principale qualité, la transparence au rayons X et d'autres qualités précédemment citées sont par exemple, un polyimide (Kapton®; Chemplex), ou un polyéthylène téréphtalate (Mylar®; Chemplex).

La sonde est par exemple choisie parmi les sondes à pH, FBRM® (Focused Beam Reflectance Measurement), à viscosité, proche infrarouge (NIR), d'humidité ou de température interne, notamment cette dernière pour communiquer la température du composé à un dispositif de régulation de température du fluide externe projeté sur la fenêtre .

Dans encore d'autres conditions préférentielles de mise en oeuvre de l'invention, le dispositif ci-dessus comprend une ou plusieurs sondes choisies parmi les sondes précédemment citées.

Dans encore d'autres conditions préférentielles de mise en oeuvre de l'invention, le dispositif comprend une plateforme mobile dans les trois directions x, y et z de l'espace pour pouvoir ajuster l'emplacement, principalement en z, du fond transparent aux rayons X.

A noter que dans la présente demande, classiquement l'article indéfini "un" doit être considéré comme un pluriel générique (signification de "au moins un" ou encore "un ou plusieurs"), sauf lorsque le contexte montre le contraire (1 ou "un seul"). Ainsi, par exemple, lorsque l'on dit ci-dessus que l'on prévoit une sonde, il s'agit d'une ou plusieurs sondes.

Les conditions préférentielles de mise en oeuvre des procédés ci-dessus décrites s'appliquent également aux autres objets de l'invention visés ci-dessus, notamment aux dispositifs conçus pour la mise en oeuvre de ces procédés et inversement, ainsi qu'à leurs applications.

L'invention sera mieux comprise si l'on se réfère aux dessins annexés sur lesquels
- la figure 1 représente un schéma d'un dispositif de mise en oeuvre de l'invention selon deux orientations,
- la figure 2 représente un schéma d'un récipient utilisable dans le dispositif de mise en oeuvre de l'invention,
- la figure 3 représente un schéma d'ensemble d'un dispositif de mise en oeuvre de l'invention.
- la figure 4 représente les courbes de suivis température interne du thermostat 26 et dans le réacteur 27 lors de l'évolution du sulfate de sodium anhydre en sulfate de sodium décahydraté.
- la figure 5 représente les diffractogrammes obtenus sans agitation 28 et avec agitation 29 du sulfate de sodium décahydraté en suspension aqueuse.
- la figure 6 représente le diagramme de phase binaire du sulfate de sodium et de l'eau.
- la figure 7 représente les diffractogrammes obtenus avec le sulfate de sodium décahydraté en suspension aqueuse 30 et le sulfate de sodium décahydraté 31, 20 minutes après filtration.
- la figure 8 représente les diffractogrammes obtenus avec le sulfate de sodium décahydraté en suspension aqueuse 40 et le sulfate de sodium anhydre 39.
- la figure 9 représente le diffractogramme du sulfate de sodium anhydre 39 obtenu en chauffant la suspension de sulfate de sodium décahydraté 40 à 33 °C.
- la figure 10 représente le premier diffractogramme obtenu après détection du phénomène exothermique de l'Exemple 3,
- la figure 11 représente les diffractogrammes enregistrés lors de l'isotherme à 18°C de l'Exemple 3 en fonction du temps,
- la figure 12 représente les diffractogrammes obtenus en fonction du temps lors de l'évolution d'un mélange de deux polymorphes de pleconaril 34 vers un seul de ces polymorphes 35 en solution éthanolique,
- la figure 13 représente les diffractogrammes obtenus en fonction du temps lors de la transition monotropique du D-Mannitol en suspension dans un mélange eau/méthanol.
- la figure 14 schématise un récipient utilisable dans le dispositif de mise en oeuvre de l'invention plus spécifiquement utile pour les analyses de solides en équilibre avec un gaz régulé en composition et en température.
- la figure 15 représente les diffractogrammes du BrHPP Benz obtenus dans l'Exemple 6 au cours de l'hydratation du BrHPP Benz avec les températures de gaz humide interne et de gaz sec externe régulées à 25°C,
- la figure 16 représente les diffractogrammes du BrHPP Benz obtenus dans l'Exemple 6 au cours de l'hydratation du BrHPP Benz à 5°C avec la température de gaz sec externe non thermo-régulé
- la figure 17 représente les diffractogrammes du BrHPP Benz obtenus dans l'Exemple 6 au cours de l'hydratation du BrHPP Benz à 5°C avec la température de gaz sec externe thermo-régulé.

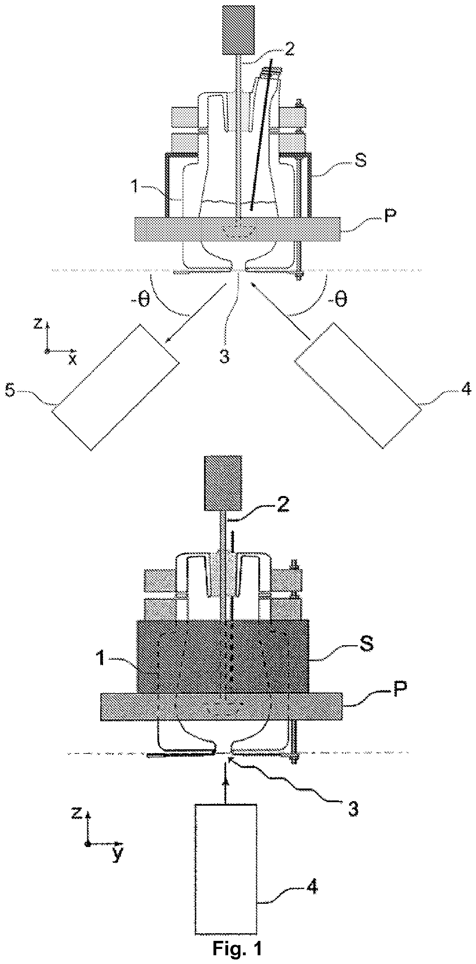

Sur la figure 1, on observe un récipient 1 à double paroi muni d'un agitateur 2 et son moteur. Le fond du récipient 1 est obturé par une membrane 3 transparente aux rayons X, réalisée ici en Kapton®. Le récipient 1 repose sur la platine xyz P par le biais d'un support métallique S.

Une source de rayons X 4 est placée sous la membrane 3 ainsi qu'un détecteur 5 de rayons X. La source 4 de rayons X utilisée ici est commercialisée par la société Siemens sous la dénomination KFLCu2K399-689®, installée dans une gaine commercialisée par la société Bruker sous la dénomination C79298-A3244-A4®, et le détecteur 5 de rayons X utilisé ici est un détecteur rapide commercialisé par la société Bruker sous la dénomination LynxEye®.

Par rapport à l'horizontale indiquée par des pointillés, les angles d'incidence des rayons X sont négatifs et égaux, ce qui justifie l'appellation "-thêta /-thêta" où thêta est l'angle d'incidence.

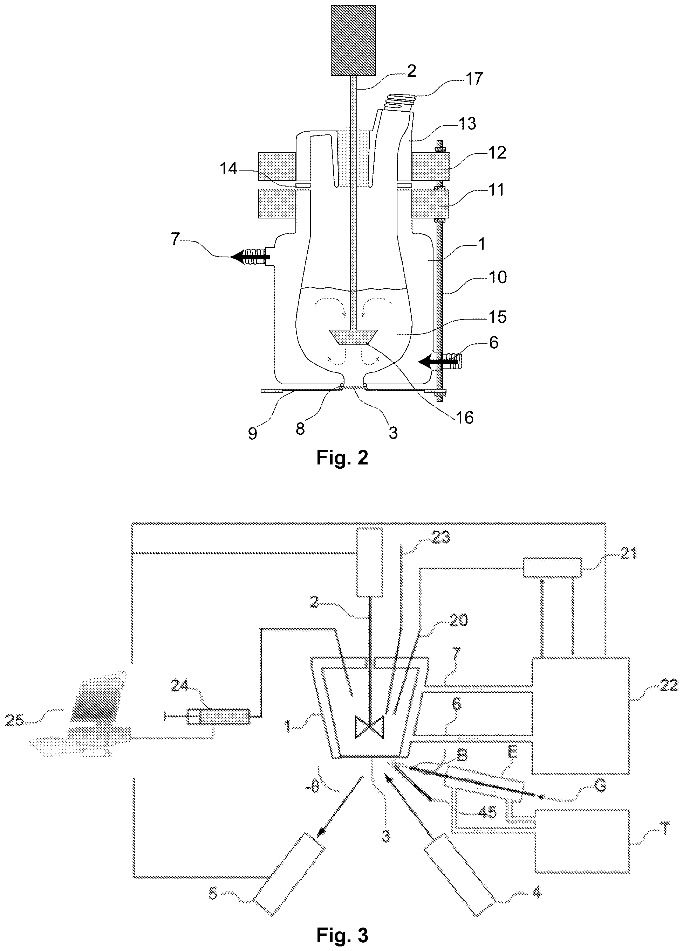

Sur la figure 2, on observe mieux le récipient 1 à double paroi muni d'un agitateur 2 et son moteur représenté au dessus. Il est muni d'une entrée 6 et d'une sortie 7 pouvant servir à la circulation d'un fluide de chauffage ou refroidissement. Le fond du récipient 1 est obturé par la membrane 3 transparente aux rayons X. L'étanchéité du fond est assurée par un joint torique serré entre le fond du récipient 1 et une plaque 9. Le serrage est réalisé ici en utilisant un système associant des tiges filetées 10 qui coopèrent avec un système de brides. La bride inférieure 11 maintient aussi le col supérieur du récipient 1 à double paroi. La bride supérieure 12 maintient le couvercle 13 et permet de presser un joint 14 en PTFE pour assurer l'étanchéité dans la partie supérieure du récipient 1. Les tiges filetées 10 et la bride inférieure 13 permettent également de fixer le récipient 1 au support métallique S. La solution, suspension ou autre système à n constituants étudié 15 est installée dans le récipient 1 et maintenue si désiré sous agitation par les pales 16 de l'agitateur 2.

L'ouverture supérieure 17 permet par exemple l'insertion de sondes, l'addition ou le retrait de produits, par exemple l'addition de solvant.

La figure 3 schématise un montage plus complet. En plus des éléments de la figure 1, on trouve une sonde de température interne 20 connectée à un dispositif de contrôle 21 lui-même relié à un système de régulation de température 22 permettant la circulation d'un fluide caloporteur par l'entrée 6 et la sortie 7. Un second système de thermo-régulation T permet de réguler la température d'un courant de fluide G projeté sur la paroi externe de la fenêtre 3 grâce à un échangeur de chaleur E. La température de ce fluide est contrôlée au niveau de la fenêtre 3 par une sonde externe de température 45 pour que la température soit identique à celle du composé à analyser dans le récipient 1. Ce fluide thermostaté est projeté vers le fond plat 3 perméable aux rayons X, par l'extérieur du récipient 1, à l'aide d'une buse B placée à proximité de celui-ci. Une autre sonde 23 a été installée. Un dispositif annexe constitué ici d'une pompe 24 permet l'injection par exemple de solvant. Un ordinateur 25 capte, enregistre, analyse et transmet des données. Il est relié notamment au détecteur 5 et à la source 4 de rayons X, à la sonde de température 20, au système de thermostat 22. Il peut aussi être relié notamment au moteur de l'agitateur ainsi qu'à la pompe 24.

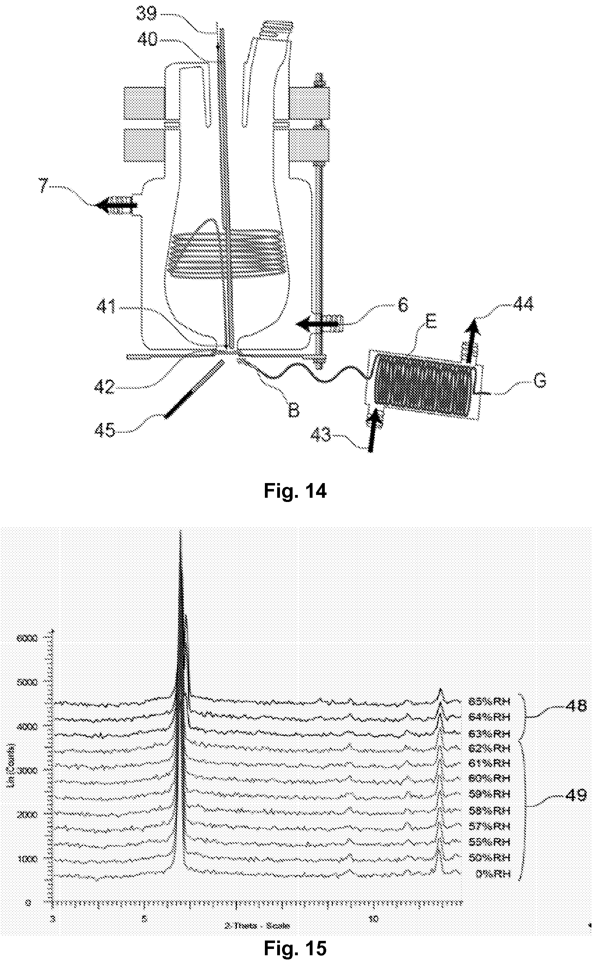

Sur la figure 14 est représentée une adaptation du récipient de la figure 1 à double paroi plus spécifique pour les systèmes gaz/solide. Un flux de fluide humide 39 est envoyé dans un récipient et est thermostaté pour atteindre la température et l'humidité voulue à son arrivée 41 au contact d'un échantillon 42. Une sonde d'humidité et une sonde de température interne 39 permettent d'assurer le contrôle d'humidité relative et de la température à l'intérieur de la chambre au contact avec le solide à analyser 42 . Pour assurer le bon contrôle de la température de l'échantillon 42 et éviter l'éventuelle condensation sur la face externe de la membrane perméable aux RX, un flux de fluide gazeux G thermostaté via un échangeur de chaleur E est envoyé sur la paroi externe de la fenêtre par une buse B. La température de ce fluide gazeux est régulée via une mesure par une sonde externe de température 45.

Les exemples de mise en oeuvre qui suivent illustrent la présente demande.

Après tout montage du film transparent sur le récipient, on règle la hauteur du fond transparent aux rayons X du récipient avant de réaliser les expériences. Pour cela, une suspension éthanolique de chlorure de sodium peut par exemple être utilisée. Des analyses par diffraction des rayons X sont réalisées entre 25° et 35° en 2Thêta à différentes hauteurs z pour obtenir la bonne valeur du pic (002) du chlorure de sodium à 31,791 ° en 2Thêta. Le récipient est ensuite lavé sans retirer le film.

### Exemple 1 : Suivi d'une suspension de sulfate de sodium en vue de caractériser un solvate efflorescent

Dans un récipient de la figure 2 monté comme schématisé à la figure 3, 43,1 g de sulfate de sodium anhydre ont été ajoutés à 70 mL d'eau chauffée à 35°C sous agitation à 1000 tr/min et le récipient refermé de manière étanche. Après 10 minutes d'agitation, la suspension obtenue a été refroidie de 35°C à 26°C en 12 minutes. Puis elle a été maintenue en isotherme à 26°C. La température a été régulée par l'intermédiaire d'un cryostat F32-HE® commercialisé par la société Julabo. La régulation a ici été réalisée sur la température interne du cryostat. Pour réaliser l'agitation, une tige à turbo-agitation axiale R 1311® commercialisée par la société IKA est utilisée avec un moteur mécanique RZR2051 control® commercialisé par la société Heidolph.

Une fois la température stabilisée, pour observer l'évolution du sulfate de sodium, une analyse par diffraction des rayons X a été effectuée en maintenant le milieu sous agitation à 1000 tr/min. La source de rayons X utilisée ici est commercialisé par la société Siemens sous la dénomination KFLCu2K399-689® positionné dans une gaine commercialisée par la société Bruker sous la dénomination de C79298-A3244-A4®, et le détecteur de rayons X utilisé ici est un détecteur rapide commercialisé par la société Bruker sous la dénomination LynxEye®. L'ensemble du diffractomètre est commandé par le logiciel XRDCommander® commercialisé par la société Bruker. Ce type de dispositif et logiciel est communément utilisé dans le cadre de diffractométries de rayons X classiques. Les analyses sont réalisées entre -10° et -52° en échelle angulaire 2 Thêta, avec des pas de 0,038°, les temps d'acquisition étant de 0,5 s par pas. Le flux de rayons X incident et le détecteur sont restés, pendant la mesure, symétriques par rapport à la verticale passant par le fond plat du récipient et orientés vers le haut en direction dudit fond plat perméable aux rayons X, lui-même positionné horizontalement.

On a en parallèle enregistré la température régulée dans le thermostat et la température de la suspension à l'intérieur du réacteur.

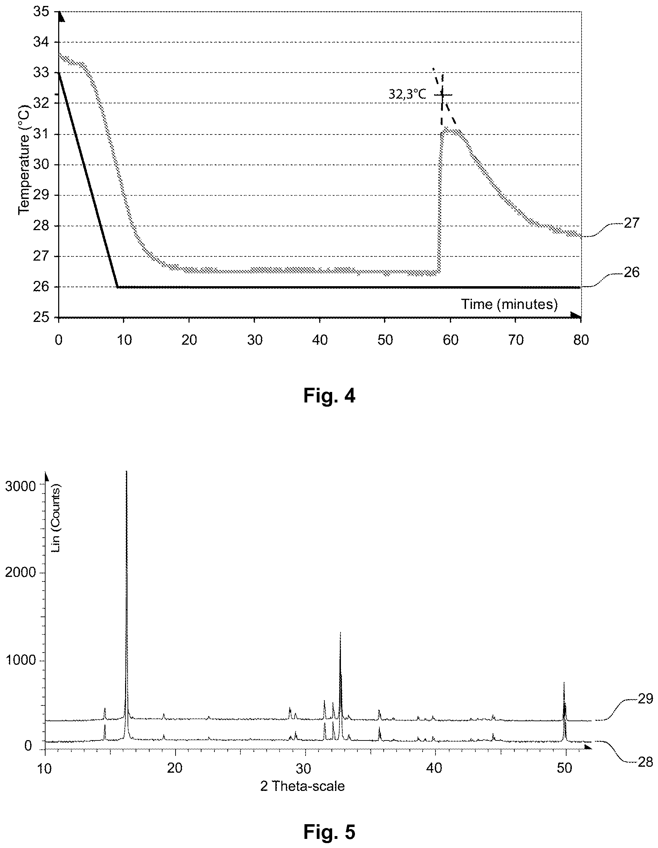

Les courbes de température sont représentées à la figure 4. Les suivis de la température régulée dans le thermostat 26 et de la température obtenue à l'intérieur du réacteur 27 montrent qu'un phénomène exothermique s'est produit dans le réacteur après 40 minutes à 26,5°C. Les diffractogrammes représentés à la figure 5 obtenus sur la suspension et après ce phénomène montrent que celui-ci correspond à la transition du sulfate de sodium anhydre vers le sulfate de sodium décahydraté.

On en déduit que le présent dispositif *in situ* d'analyse par diffraction des rayons X permet de suivre l'évolution d'une phase anhydre en phase hydratée.

La formation de l'hydrate menant à la formation de gros cristaux, la suspension avait tendance à prendre en masse lorsque l'agitation était stoppée. Cependant, les diffractogrammes de la figure 5 montrent les résultats obtenus sans agitation 28 et avec agitation 29 sont identiques.

On en déduit que l'agitation n'a pas d'influence sur la qualité et la justesse des résultats obtenus. En conséquence les analyses *in situ* par diffraction des rayons X peuvent indifféremment être réalisées avec ou sans agitation.

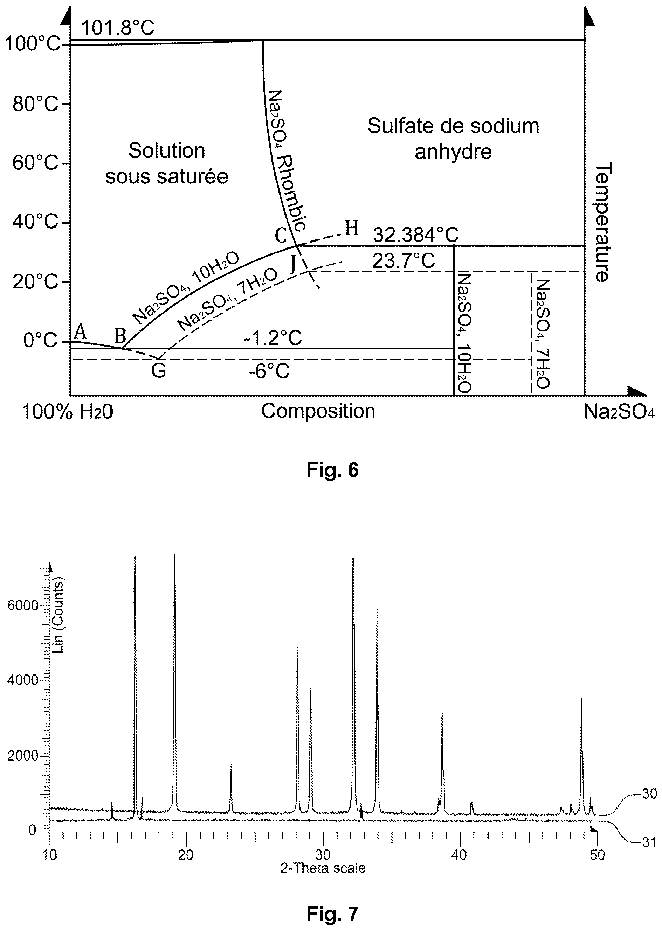

Le diagramme de phase binaire du sulfate de sodium et de l'eau est représenté figure 6. La température du péritectique correspondant à la transition anhydre/decahydrate est de 32,384°C. Lors de l'expérience, la température maximum mesurée lors de cette transition est de 31,1 °C, mais en extrapolant les parties ascendantes et descendantes de la courbe de température, les courbes se croisent à une température de 32,3°C (figure 4). La température maximum atteinte lors de la transition est donc très proche de celle de l'invariant péritectique stable.

On en déduit que dispositif objet de la présente demande permet d'obtenir de précieuses informations complémentaires à celles obtenus par l'analyse de diffraction des rayons X classique. En conséquence il est nécessaire de pouvoir insérer des sondes de suivis dans le récipient.

Un échantillon du sulfate de sodium décahydraté obtenu a été filtré et laissé sous conditions ambiantes pendant 20 minutes puis analysé par diffraction des rayons X sur poudre. Pour cette analyse le même diffractomètre a été utilisé. La poudre a été étalée sur une lamelle de verre dépoli et fixée sur la platine xyz. Le diffractogramme obtenu (figure 7) montre que le sulfate de sodium décahydraté 30 s'est transformé en sulfate de sodium anhydre 31, ce qui montre le caractère efflorescent du sulfate de sodium décahydraté.

On en déduit donc que le dispositif d'analyse *in situ* par diffraction des rayons X permet d'observer le sulfate de sodium décahydraté qui est efflorescent. En conséquence, ce dispositif permet d'analyser des phases efflorescentes.

L'expérimentation réalisée montre que la technique de l'invention permet d'observer des phases efflorescentes, c'est-à-dire des phases stables lorsqu'elles sont en suspension mais qui deviennent métastables une fois filtrées.

### Exemple 2 : Suivi de déshydratation en vue d'explorer un diagramme de phase.

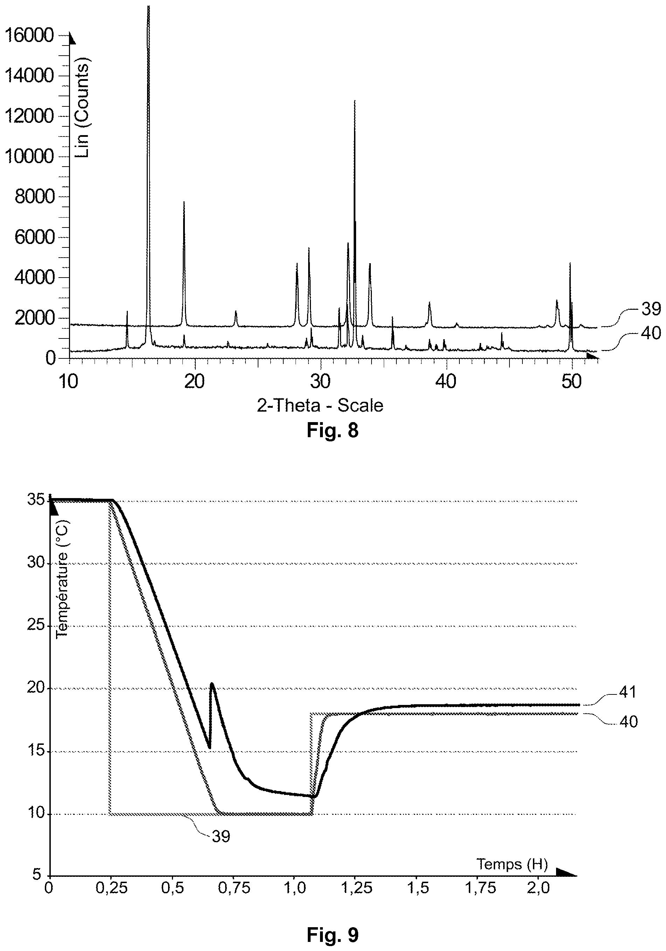

La suspension de sulfate de sodium décahydraté a été chauffée à 33°C sous agitation à 1000 tr/min. Après stabilisation de la température, la suspension a été analysée par diffraction des rayons X. Le diffractogramme obtenu (figure 8) montre que le sulfate de sodium décahydraté 40 a évolué en sulfate de sodium anhydre 39. La transformation du sulfate de sodium anhydre en décahydrate est donc réversible.

L'expérimentation réalisée montre que la technique de l'invention permet d'observer la déshydratation d'un hydrate en chauffant la suspension à une température supérieure à celle du péritectique.

### Exemple 3 : Suivi de l'évolution du sulfate de sodium anhydre en sulfate de sodium héptahydraté en vue d'observer une phase métastable.

Dans un récipient de la figure 2 monté comme schématisé à la figure 3, 43,1 g de sulfate de sodium anhydre ont été ajoutés à 70 mL d'eau chauffée à 35°C sous agitation à 1000 tr/min. La suspension obtenue a ensuite été refroidie de 35°C à 10°C en 30 minutes. La température et l'agitation ont été effectuées avec le même matériel que précédemment.

L'évolution de la température a été suivie. La figure 9 représente la température programmée dans le cryostat 39, la température obtenue dans le bain du cryostat 40 et la température obtenue dans le récitent 41 en fonction du temps. Dès qu'un phénomène exothermique a été détecté (à 11,4°C), augmentant la température du système à 20,5°C, une analyse par diffraction des rayons X a été effectuée. Les analyses sont réalisées entre -10° et -52° en échelle angulaire 2 Thêta, avec des pas de 0,038°, les temps d'acquisition étant de 0,5 s par pas.

La suspension a ensuite été stabilisée en isotherme à 18°C sous une agitation à 900 tr/min et des analyses par diffraction des rayons X de la suspension ont été réalisées automatiquement toutes les heures pendant 10 heures en maintenant le milieu sous agitation à 900 tr/min. Les analyses sont réalisées entre -10° et -52° en échelle angulaire 2 Thêta, avec des pas de 0,038°, les temps d'acquisition étant de 0,5 s par pas.

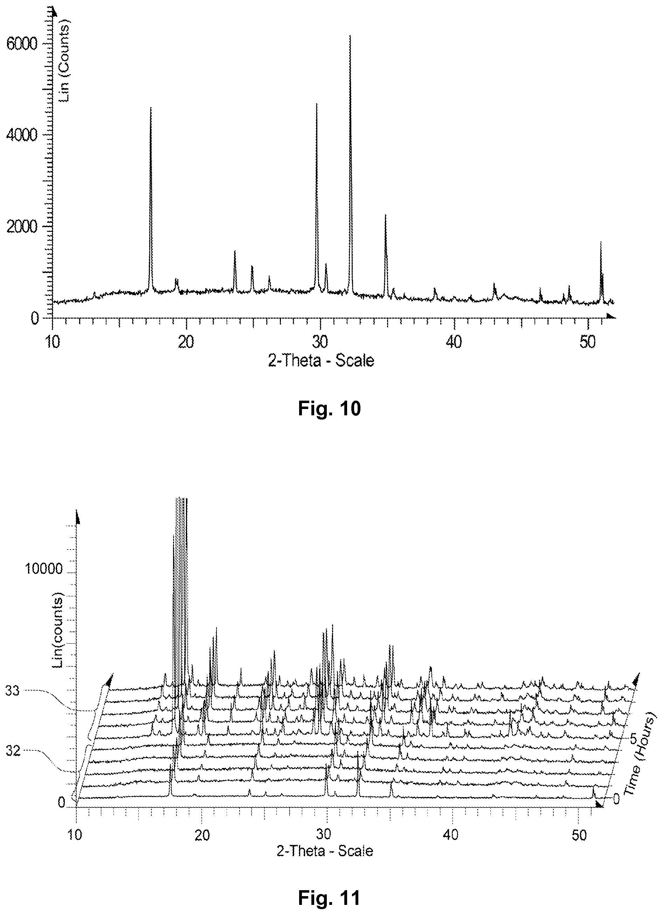

La figure 10, représentant le premier diffractogramme obtenu après détection du phénomène exothermique, montre que ce phénomène correspond à la transition du sulfate de sodium anhydre vers le sulfate de sodium heptahydraté. Le péritectique correspondant à la transition anhydre/heptahydrate est à 23,7°C (figure 6). Lors de l'expérience, la température maximum atteinte lors de cette transition est donc proche de la température de l'invariant péritectique métastable.

La figure 11 représente les diffractogrammes enregistrés lors de l'isotherme à 18°C en fonction du temps. Les diffractogrammes obtenus montrent que le sulfate de sodium heptahydraté est la seule phase cristalline en suspension pendant les 4 premières heures d'isotherme 32. Après 5 heures à 18°C sous une agitation à 900 tr/min, le diffractogramme obtenu correspond à celui le sulfate de sodium décahydraté 33. Il y a donc eu une transformation spontanée du sulfate de sodium heptahydraté en sulfate de sodium décahydraté.

On en déduit donc que le sulfate de sodium heptahydraté est une phase métastable. En conséquence, le dispositif d'analyse *in situ* par diffraction des rayons X permet de détecter des phases métastables et de suivre leurs évolutions vers des phases plus stables.

L'expérimentation réalisée montre que la technique de l'invention permet d'analyser des phases efflorescentes (stables uniquement lorsqu'elles sont en suspension) et des phases métastables.

L'expérimentation réalisée a également permis de suivre des transitions de phases : (i). transition réversible d'une phase anhydre vers une phase hydratée; (ii). transition irréversible d'une phase métastable vers une phase stable.

Elle montre aussi que l'analyse d'une suspension sous agitation n'altère pas la qualité ni la justesse des résultats obtenus.

Elle montre également la possibilité de coupler l'analyse par diffraction des rayons X *in situ* avec d'autres sondes, comme ici une sonde de température, pour effectuer des suivis spécifiques du système analysé (ex : sonde de pH pour des suivis de systèmes acido-basiques, etc...).

### Exemple 4 : Suivi de la cristallisation de pleconaril en solution éthanolique en vue de suivre des transitions polymorphiques

Dans un récipient de la figure 2 monté comme schématisé à la figure 3, on a dissous 33,73 g de pleconaril dans 58,80 g d'éthanol à 35°C. Le composé a été cristallisé en refroidissant de 35°C à 27,8°C en 10 minutes sous une agitation à 900 tr/min. La température a ensuite été maintenue à 27,8°C sous une agitation à 900 tr/min. La température et l'agitation ont été effectuées avec le même matériel que précédemment.

Une fois la température stabilisée, des analyses par diffraction des rayons X ont été automatiquement effectuées toutes les heures pendant 20 heures en maintenant le milieu sous agitation à 900 tr/min. La source de rayons X, la gaine, le détecteur et le logiciel de commande de l'ensemble du diffractomètre utilisés ici sont ceux utilisés précédemment. Les analyses sont réalisées entre -3° et -30° en échelle angulaire 2 Thêta, avec des pas de 0,038°, les temps d'acquisition étant de 1,0 s par pas.

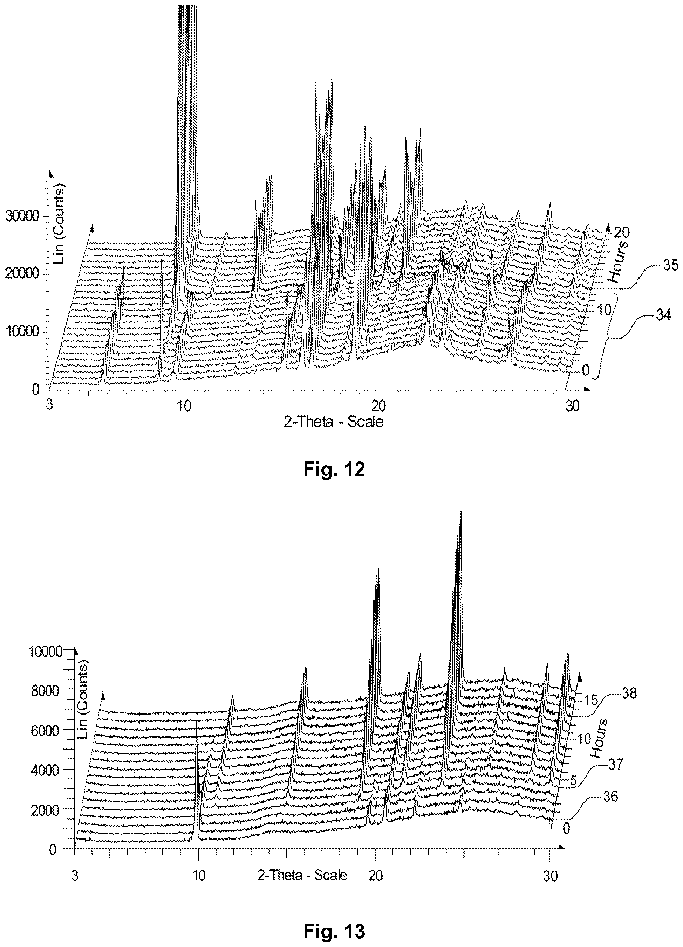

La figure 12 présente les diffractogrammes obtenus en fonction du temps. Dans un premier temps, les diffractogrammes montrent qu'un mélange de forme I et de forme III a été obtenu 34. Après 14 heures d'isotherme à 27,8°C, la forme I a totalement été convertie en forme III 35. La forme I est donc métastable à cette température, ce qui est en accord avec la transition énantiotropique de la forme stable à base température (forme III) vers la forme la plus stable à haute température (forme I) à 31 °C ±2°C décrite dans la littérature (S. Coste, J-M. Schneider, M-N. Petit, G. Coquerel, Cryst. Growth Des., 2004, 4(6), 237-244).

Cet exemple montre que la technique d'analyse de l'invention permet d'observer et de faire un suivi cinétique des transitions polymorphiques.

### Exemple 5 : Suivi de la transition monotropique du D-Mannitol

Dans un récipient de la figure 2 monté comme schématisé à la figure 3, on a dissous 4,5 g de forme beta de D-mannitol dans un mélange eau/méthanol, contenant 48,1 mL d'éthanol et 39,5 mL d'eau, à 40°C sous une agitation à 1200 tr/min. La solution obtenue a été refroidie de 40°C à 15°C en 30 minutes sans qu'il y ait de nucléation spontanée. 30 mL de méthanol ont ensuite été ajoutés rapidement dans cette solution. La température du système a ensuite été réglée à 20°C en maintenant l'agitation à 1200 tr/min. La température et l'agitation ont été effectuées avec le même matériel que précédemment.

Une fois la température stabilisée, des analyses par diffraction des rayons X ont été effectuées toutes les heures pendant 16 heures en maintenant le milieu sous agitation 1200 tr/min. La source de rayons X, la gaine, le détecteur et le logiciel de commande de l'ensemble du diffractomètre utilisés ici sont ceux utilisés précédemment. Les analyses sont réalisées entre -3° et -30° en 2Theta, avec des pas de 0,038°, les temps d'acquisition étant de 1,0 s par pas.

Les diffractogrammes obtenus sont présentés en fonction du temps à la figure 13. Le premier diffractogramme obtenu sur la suspension à 20°C montre que l'ajout de l'antisolvant (méthanol) à la solution sursaturée à 15°C a entraîné la cristallisation de la forme delta du D-mannitol 36. Après 4 heures d'isotherme à 20°C, les premiers pics de la forme béta ont été observés sur le diffractogramme 37. La transition complète a été observée après 13 heures d'isotherme 38.

La forme delta du D-mannitol est donc la forme métastable à 20°C. En effet, le D-mannitol présente un système à caractère monotropique, c'est-à-dire qu'une forme polymorphique est métastable quelles que soient les conditions de température et de pression. La forme béta est la forme la plus stable du D-Mannitol dans le domaine de température et de pression étudié.

La technique de l'invention mise en oeuvre sur des suspensions en équilibre avec leurs liqueur-mères permet donc d'étudier les stabilités relatives des polymorphes lorsqu'ils sont en suspension.

### Exemple 6 : Suivi de l'hydratation du BrHPP Benz à 5 et 25°C

Une étude préliminaire du comportement du sel de benzathine d'une bromohydrine pyrophosphate (BrHPP Benz ci-après,° Coquerel, G.; Aubin, E. Phosphoantigen Salts of Organic Bases and Methods for their Crystallization. Purification by means of crystallization of some Pyrophosphate analogous antigen. US patent N°60/724,308, 06/10/2005, 2005) en fonction de l'humidité relative a été réalisée en DVS (Dynamic Vapor Sorption - Sorption Dynamique de Vapeur). Cette étude a montré que le BrHPP Benz s'hydrate en BrHPP Benz, 2H₂O à partir de 62% d'Humidité Relative (HR) à 25°C et à partir de 58% HR à 5°C.

Des analyses similaires ont été réalisées grâce au montage représenté à la figure 3. L'hydratation est détectée par un suivi réalisé par diffraction des rayons-X à humidité variable pour deux températures différentes.

### - Gaz humide :

Dans un récipient comme présenté figure 14, quelques milligrammes de poudre de BrHPP Benz anhydre ont été déposés au centre de la fenêtre transparente aux rayons-X, de sorte à ne pas être au contact des parois du récipient. La température interne du récipient a été régulée par un premier thermostat (F32-HE® commercialisé par Julabo) via la double enveloppe du récipient.

De l'air contrôlé en humidité et en température balaye la poudre.

La régulation en humidité a été réalisée grâce à un générateur d'humidité (Wetsys® commercialisé par Setaram). La thermo-régulation du gaz humide a été réalisée en circulant dans un tuyau (téflon, longueur: 2 mètres, diamètre interne 3 mm) placé dans l'enceinte du récipient. La température de l'enceinte a été ajustée pour que la température de l'air humide au dessus de la poudre soit à la température voulue.

### - Gaz externe :

De l'air sec est pompé et envoyé sur la face extérieure de la fenêtre transparente aux rayons-X. Cet air sec est thermo-régulé par un échangeur de chaleur à contre-courant branché sur un second thermostat (polystat cc2®, commercialisé par Huber). La température de ce second thermostat est paramétrée pour que le gaz sec au niveau de l'extérieur de la membrane transparente aux RX soit à la même température que celle de la face supérieure dans la chambre où reposent les cristaux de BrHPP Benz à analyser.

### a) Etude de l'hydratation du BrHPP Benz à 25°C:

Les températures du gaz humide interne et du gaz sec externe sont régulées à 25°C. Un diagramme de diffraction est enregistré toutes les heures.

### Paramètres:

- gaz interne :
   - Température T _{air humide au contact de la poudre}=25°C
   - Débit Q _{air humide}=50 mL/min
- gaz externe :
   - Température T _{air externe} = 25°C
   - Débit Q _{air sec}=70 L/h.

Les diffractogrammes obtenus lors du suivi (figure 15) montrent que la transition de l'anhydre en dihydrate commence entre une humidité relative (HR) de 62 et 63% à 25°C.

Ce résultat est en accord avec l'analyse DVS réalisée à 25°C.

### b) Etude de l'hydratation du BrHPP Benz à 5°C:

Trois essais sont réalisés pour montrer l'importance du gaz sec externe thermo-régulé:
- sans gaz sec externe,
- avec le gaz sec externe mais non thermo-régulé,
- avec le gaz sec externe thermo-régulé.
A l'intérieur du récipient, le gaz humide est régulé à 5°C.

### Sans gaz sec externe:

### Paramètres:

- Gaz interne :
- T _{air humide au contact de la poudre} = 5°C
- Q _{air humide}=50 mL/min

| | | | | | | | | | | | | |
|---|---|---|---|---|---|---|---|---|---|---|---|---|
| %HR à 5°C | 0 | 47,7 | 51,2 | 55,1 | 59 | 63,3 | 67,6 | 72,4 | 77,6 | 83,2 | 88,9 | 95 |
| Durée (H.) | 1 | 1 | 1 | 1 | 1 | 1 | 1 | 1 | 1 | 1 | 1 | 4 |

Les diffractogrammes obtenus montrent que l'intensité du signal est décroissante, sans que l'évolution vers la phase dihydratée se produise.

### Avec gaz sec externe non thermo-régulé

### Paramètres:

- Gaz interne:
- T _{air humide au contact de la poudre} = 5°C
- Q _{air humide} = 50 mL/min

| | | | | | | | | | | | | |
|---|---|---|---|---|---|---|---|---|---|---|---|---|
| %HR à 5°C | 0 | 47,7 | 51,2 | 55,1 | 59 | 63,3 | 67,6 | 72,4 | 77,6 | 83,2 | 88,9 | 95 |
| Durée (H.) | 1 | 1 | 1 | 1 | 1 | 1 | 1 | 1 | 1 | 1 | 1 | 4 |

- Gaz externe:
- T _{air externe} = 28°C
- Q _{air sec} = 70 L/h.

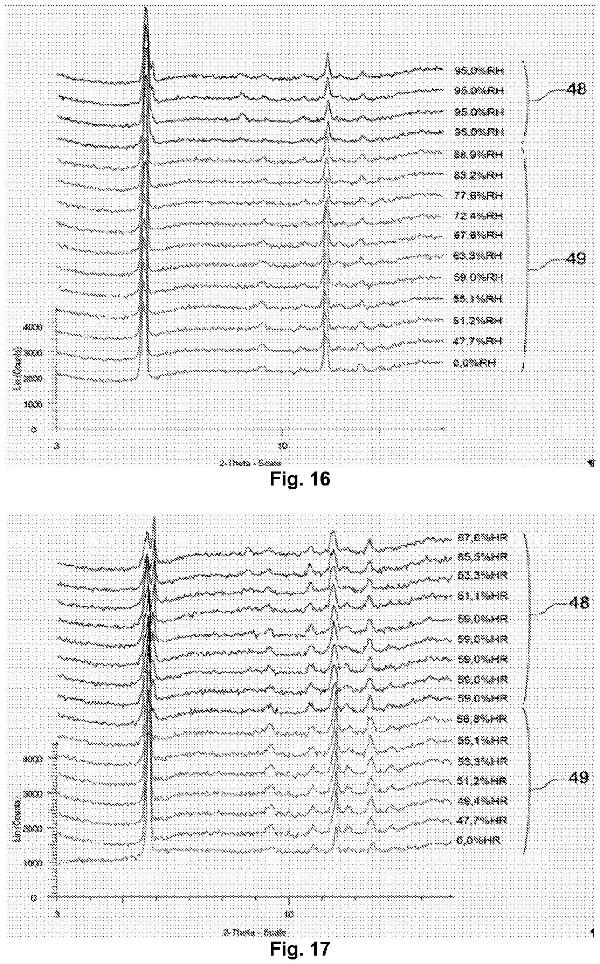

D'après les diffractogrammes enregistrés toutes les heures (figure 16), à 5°C, le seuil d'humidité pour observer la transition anhydre → dihydrate se situe vers 95% par suivis en diffraction X avec le flux de gaz extérieur non thermo-régulé. Ce résultat est en profond désaccord avec l'étude DVS (58% HR à 5°C).

### Avec gaz sec externe thermo-régulé

### Paramètres:

- Gaz interne :
- T _{air humide au contact de la poudre} =5°C
- Q _{air humide}=50 mL/min

| | | | | | | | | | | | | |
|---|---|---|---|---|---|---|---|---|---|---|---|---|
| %HR à 5°C | 0 | 47,7 | 49,4 | 51,2 | 53,3 | 55,2 | 56,8 | 59 | 61,1 | 63,3 | 65,5 | 67,6 |
| Durée (H.) | 1 | 1 | 1 | 1 | 1 | 1 | 1 | 5 | 1 | 1 | 1 | 1 |

- Gaz externe:
- T _{air externe sur la fenêtre} = 5°C
- Q _{air sec}=70 L/h.

D'après les diffractogrammes enregistrés toutes les heures (figure 17), à 5°C, le seuil d'humidité pour observer la transition anhydre → dihydrate se situe vers 59% par suivi en diffraction X avec un flux de gaz extérieur thermo-régulé.
Ce résultat est bien en accord avec l'étude DVS (HR 58% pour 5°C).

En absence de gaz externe, ou lorsque celui-ci n'est pas thermostaté à la température de l'analyse, les résultats sont erronés. Il est donc important d'envoyer un flux gazeux thermo-régulé sur la partie extérieure du récipient portant l'échantillon pour assurer une homogénéité de température au niveau de la poudre analysée.

## Revendications

1. Procédé de mesure de diffraction des rayons X, dans lequel on installe dans un récipient (1) comprenant un fond plat perméable aux rayons X, un composé à analyser, et on procède à une analyse par diffraction des rayons X en envoyant un flux de rayons X vers le haut en direction dudit fond perméable aux rayons X et en mesurant le flux de rayons X diffractés réfléchi vers le bas, et **caractérisé en ce que** l'on projette vers le fond plat (3) perméable aux rayons X, par l'extérieur du récipient (1), un fluide thermostaté à la même température que celle du composé à analyser dans le récipient.

2. Procédé selon la revendication 1, **caractérisé en ce que** le fond plat (3) perméable aux rayons X est installé horizontalement.

3. Procédé selon la revendication 1 ou 2, **caractérisé en ce que** l'on fait varier l'angle d'incidence du flux des rayons X de -0,5 degrés à -70 degrés.

4. Procédé selon l'une des revendications 1 à 3, **caractérisé en ce que** le récipient (1) est muni d'un dispositif de thermorégulation (22).

5. Utilisation du procédé tel que défini à l'une des revendications 1 à 4 pour le suivi d'un processus de cristallisation.

6. Utilisation du procédé tel que défini à l'une des revendications 1 à 4 pour le suivi d'une évolution polymorphique ou de solvatation.

7. Utilisation du procédé tel que défini à l'une des revendications 1 à 4 pour l'étude de la stabilité d'une phase solide dans une matrice liquide, gaz, gel, émulsion ou solide amorphe.

8. Utilisation du procédé tel que défini à l'une des revendications 1 à 4 pour la recherche de phases métastables ou d'intermédiaires réactionnels.

9. Utilisation du procédé tel que défini à l'une des revendications 1 à 4 pour l'étude de l'évolution d'un sel en fonction du pH.

10. Utilisation du procédé tel que défini à l'une des revendications 1 à 4 pour l'étude de l'évolution d'un sel dans un solvant en fonction de la composition en solvant et/ou en constituants de toutes sortes susceptibles de donner lieu à la formation d'un solide.

11. Dispositif de mesure de diffraction de rayons X comprenant un récipient (1) comprenant un fond obturé par une membrane (3) transparente aux rayons X, ainsi qu'un diffractomètre muni d'un goniomètre (4,5) installé pour diriger un faisceau de rayons X par en dessous vers la membrane (3) transparente aux rayons X et le détecteur (5) étant installé pour la mesure des rayons X diffractés par en dessous, le récipient (1) comportant des moyens de chauffage ou refroidissement d'un composé à analyser, **caractérisé en ce qu'**il comporte extérieurement au récipient une ou plusieurs buses (B) pour projeter un fluide thermostaté à la même température que celle d'un composé à analyser dans le récipient (1), vers le fond plat perméable aux rayons X, par l'extérieur du récipient, le récipient (1) comprenant une sonde de température (20) servant à accorder la température du composé à analyser et celle du fluide.

12. Dispositif selon la revendication 11, **caractérisé en ce que** le fond du récipient (1) comprend une ouverture circulaire obturée par la membrane (3) transparente aux rayons X.

13. Dispositif selon l'une des revendications 11 et 12, **caractérisé en ce que** la membrane (3) transparente aux rayons X est plate.

14. Dispositif selon l'une des revendications 11 à 13, **caractérisé en ce que** la membrane (3) transparente aux rayons X est réalisée en polyimide ou en polyéthylène téréphtalate.

15. Dispositif selon l'une des revendications 11 à 14, **caractérisé en ce qu'**il comprend une ou plusieurs sondes (20, 23).

16. Dispositif selon l'une des revendications 11 à 15, **caractérisé en ce qu'**il comprend une plateforme P mobile dans les trois directions x, y et z de l'espace en conséquence de quoi on peut ajuster l'emplacement du fond (3) transparent aux rayons X.

## Patentansprüche

1. Verfahren zur Messung der Streuung von Röntgenstrahlen, bei welchem in einem Behälter (1), welcher einen für Röntgenstrahlen durchlässigen flachen Boden umfasst, ein Analyt angebracht wird, und bei welchem eine Analyse durch Streuung von Röntgenstrahlen durchgeführt wird, indem ein Röntgenstrahlenfluss nach oben und in Richtung des für Röntgenstrahlen durchlässigen Bodens geschickt und der nach unten reflektierte Fluss gestreuter Röntgenstrahlen gemessen wird, und **dadurch gekennzeichnet, dass** ein Fluid, welches auf dieselbe Temperatur thermostatisiert ist wie der Analyt in dem Behälter, durch das Äußere des Behälters (1) auf den für Röntgenstrahlen durchlässigen flachen Boden (3) gerichtet wird.

2. Verfahren nach Anspruch 1, **dadurch gekennzeichnet, dass** der für Röntgenstrahlen durchlässige flache Boden (3) horizontal angebracht ist.

3. Verfahren nach Anspruch 1 oder 2, **dadurch gekennzeichnet, dass** man den Einfallwinkel des Röntgenstrahlenflusses von -0,5 Grad bis -70 Grad variieren lässt.

4. Verfahren nach einem der Ansprüche 1 bis 3, **dadurch gekennzeichnet, dass** der Behälter (1) mit einer Temperaturregelvorrichtung (22) versehen ist.

5. Anwendung des Verfahrens gemäß der Definition in einem der Ansprüche 1 bis 4 für die Durchführung eines Kristallisationsprozesses.

6. Anwendung des Verfahrens gemäß der Definition in einem der Ansprüche 1 bis 4 für die Durchführung einer Polymorph-Bildung oder Solvatisierung.

7. Anwendung des Verfahrens gemäß der Definition in einem der Ansprüche 1 bis 4 für die Untersuchung der Stabilität einer festen Phase in einer flüssigen Matrix, in Gas, Gel, Emulsion oder einem amorphen Feststoff.

8. Anwendung des Verfahrens gemäß der Definition in einem der Ansprüche 1 bis 4 für die Erforschung von metastabilen Phasen oder Reaktionszwischenprodukten.

9. Anwendung des Verfahrens gemäß der Definition in einem der Ansprüche 1 bis 4 für die Untersuchung der Entwicklung eines Salzes in Abhängigkeit vom pH-Wert.

10. Anwendung des Verfahrens gemäß der Definition in einem der Ansprüche 1 bis 4 für die Untersuchung der Entwicklung eines Salzes in einem Lösungsmittel in Abhängigkeit von der Zusammensetzung im Lösungsmittel und/oder von verschiedenen Bestandteilen, die zu einer Bildung eines Feststoffes führen können.

11. Vorrichtung zur Messung der Streuung von Röntgenstrahlen, welche einen Behälter (1) umfasst, der einen durch eine für Röntgenstrahlen durchlässige Membran (3) abgedeckten Boden aufweist, sowie ein mit einem Goniometer (4,5) versehenes Diffraktometer, dazu angebracht, ein Röntgenstrahlenbündel von unten zu der für Röntgenstrahlen durchlässigen Membran (3) zu dirigieren und wobei der Detektor (5) für die Messung der von unten gestreuten Röntgenstrahlen angebracht ist, wobei der Behälter (1) Mittel zur Erwärmung oder Kühlung eines Analyts umfasst, **dadurch gekennzeichnet, dass** er außerhalb des Behälters eine oder mehrere Düsen (B) umfasst, um ein Fluid, das auf die gleiche Temperatur temperiert ist wie ein Analyt in dem Behälter (1), von außerhalb des Behälters gegen den für Röntgenstrahlen durchlässigen Boden zu spritzen, wobei der Behälter (1) einen Temperaturfühler (20) aufweist, der dazu dient, die Temperatur der zu analysierenden Zusammensetzung und diejenige des Fluids abzustimmen.

12. Vorrichtung nach Anspruch 11, **dadurch gekennzeichnet, dass** der Boden des Behälters (1) eine kreisförmige Öffnung aufweist, die durch die für Röntgenstrahlen durchlässige Membran (3) verschlossen ist.

13. Vorrichtung nach einem der Ansprüche 11 und 12, **dadurch gekennzeichnet, dass** die für Röntgenstrahlen durchlässige Membran (3) flach ist.

14. Vorrichtung nach einem der Ansprüche 11 bis 13, **dadurch gekennzeichnet, dass** die für Röntgenstrahlen durchlässige Membran (3) aus Polyimid oder Polyethylen-Terephtalat gefertigt ist.

15. Vorrichtung nach einem der Ansprüche 11 bis 14, **dadurch gekennzeichnet, dass** sie eine oder mehrere Fühler (20, 23) aufweist.

16. Vorrichtung nach einem der Ansprüche 11 bis 15, **dadurch gekennzeichnet, dass** sie eine Plattform P umfasst, die in den drei Raumrichtungen x, y und z beweglich ist, wodurch die Position des für Röntgenstrahlen durchlässigen Bodens (3) eingestellt werden kann.

## Claims

1. A method of measuring scattering of X-rays, **characterized in that** a compound to be analyzed is installed in a receptacle (1) comprising an X-ray-permeable flat bottom, and an X-ray diffraction analysis is undertaken by sending an X-ray stream upwards toward said X-ray-permeable bottom and by measuring the stream of scattered X-rays reflected downwards, and **characterized in that** a fluid thermostatically controlled to the same temperature as that of the compound to be analyzed in the receptacle is projected toward the X-ray-permeable flat bottom (3), from outside the receptacle (1).

2. The method as claimed in claim 1, **characterized in that** the X-ray-permeable flat bottom (3) is installed horizontally.

3. The method as claimed in claim 1 or 2, **characterized in that** the angle of incidence of the X-ray stream is made to vary from -0.5 degrees to -70 degrees.

4. The method as claimed in one of claims 1 to 3, **characterized in that** the receptacle (1) is provided with a thermoregulating device (22).

5. The use of the method such as defined at one of claims 1 to 4 for the tracking of a crystallization process.

6. The use of the method such as defined at one of claims 1 to 4 for the tracking of a polymorphic or solvation evolution.

7. The use of the method such as defined at one of claims 1 to 4 for the study of the stability of a solid phase in a liquid, gas, gel, emulsion or amorphous solid matrix.

8. The use of the method such as defined at one of claims 1 to 4 for the search for metastable phases or reaction intermediaries.

9. The use of the method such as defined at one of claims 1 to 4 for the study of the evolution of a salt as a function of pH.

10. The use of the method such as defined at one of claims 1 to 4 for the study of the evolution of a salt in a solvent as a function of the composition in solvent and/or in constituents of all sorts liable to give rise to the formation of a solid.

11. A device for measuring scattering of X-rays comprising a receptacle (1) comprising a bottom plugged by an X-ray-transparent membrane (3), as well as a diffractometer provided with a goniometer (4,5) installed so as to direct a beam of X-rays from underneath toward the X-ray-transparent membrane (3) and the detector (5) being installed for the measurement of the X-rays scattered from underneath, the receptacle (1) comprising means for heating or cooling a compound to be analyzed, **characterized in that** it comprises outside the receptacle one or more nozzles (B) for projecting a fluid thermostatically controlled to the same temperature as that of a compound to be analyzed in the receptacle (1), toward the X-ray-permeable flat bottom, from outside the receptacle, the receptacle (1) comprising an internal temperature probe (20) serving to match the temperature of the compound to be analyzed and that of the fluid.

12. The device as claimed in claim 11, **characterized in that** the bottom of the receptacle (1) comprises a circular opening plugged by the X-ray-transparent membrane (3).

13. The device as claimed in claim 11 or 12, **characterized in that** the X-ray-transparent membrane (3) is flat.

14. The device as claimed in one of claims 11 to 13, **characterized in that** the X-ray-transparent membrane (3) is made of polyimide or of polyethylene terephthalate.

15. The device as claimed in one of claims 11 to 14, **characterized in that** it comprises one or more probes (20, 23).

16. The device as claimed in one of claims 11 to 15, **characterized in that** it comprises a platform P mobile in the three directions x, y and z in space as a consequence of which it is possible to adjust the location of the X-ray-transparent bottom (3).
